Europäisches Patentamt

European Patent Office

Office européen des brevets

(19)

(11) Veröffentlichungsnummer: **0 398 162**
**A2**

## (12) EUROPÄISCHE PATENTANMELDUNG

(21) Anmeldenummer: **90108841.9**

(22) Anmeldetag: **10.05.90**

(51) Int. Cl.5: **C08J 9/12, //(C08J9/12, C08L75:04)**

(30) Priorität: **10.05.89 DE 3915314**

(43) Veröffentlichungstag der Anmeldung:
**22.11.90 Patentblatt 90/47**

(84) Benannte Vertragsstaaten:
**AT BE CH DE DK ES FR GB GR IT LI NL SE**

(71) Anmelder: **Stog, Arnulf**
**Menzinger Strasse 97**
**D-8000 München 50(DE)**

(72) Erfinder: **Pöschl, Günter,**
**Am Tribergle 2,**
**D-7052 Schwaikheim,(DE)**
Erfinder: **Stog, Arnulf Dipl.-Ing., Dipl.-Kfm.,**
**Menzinger Strasse 97,**
**D-8000 München 50,(DE)**

(74) Vertreter: **Patentanwälte Dipl.-Ing. R.**
**Splanemann Dr. B. Reitzner Dipl.-Ing. K.**
**Baronetzky**
**Tal 13**
**D-8000 München 2(DE)**

(54) **Verfahren zur Herstellung von Schaumstoff auf Polyurethangrundlage.**

(57) Beschrieben wird ein Verfahren zur Herstellung von Schaumstoff auf Polyurethangrundlage, wobei die herkömmlichen Rezepturkomponenten (Polyole und Polyisocyanate) mit einer wäßrigen Ammoniaklösung versetzt werden und anschließend der Verschäumungsvorgang durchgeführt wird. Nach einer Abwandlung bzw. weiteren Ausgestaltung dieses Verfahrens wird im Reaktionsgemisch, in einer oder beiden Rezepturkomponenten oder in der wäßrigen Ammoniaklösung ein Treib- oder Zellgas mit einem Taupunkt von höher als -50 °C dispergiert und/oder gelöst, vorzugsweise in einer sonochemischen Reaktion.

EP 0 398 162 A2

Die Erfindung betrifft ein Verfahren zur Herstellung von Schaumstoff auf Polyurethangrundlage.

Schaumstoffe, d.h. schaumartige Kunststoffe, werden beispielsweise zu Dämmzwecken eingesetzt, wenn es aus Energiespargründen auf eine gute Wärmedämmung ankommt, wie beispielsweise bei Kühlschränken, Gefriertruhen und dgl.

Bei den bislang bekannten Schaumstoffen wird ein besonders gutes Wärme- und Kältedämmvermögen erzielt, wenn als Treibmittel zum Verschäumen des Kunststoffes ein Fluorchlorkohlenwasserstoff oder FCKW eingesetzt wird. Bei FCKWs handelt es sich um halogenierte Fluoralkane (mit Br, Cl). Es ist festgestellt worden, daß FCKWs die für die UV-Abschirmung unerläßliche Ozonschicht der Erde schädigen. Daher ist es notwendig, den Einsatz von FCKWs mehr und mehr zu verringern, zumal in absehbarer Zeit mit einem völligen Verbot zu rechnen ist.

Es sind bereits Verfahren bekannt, mittels welchen sich der Einsatz von FCKWs in Schaumstoffen vermeiden läßt. Z.B. lassen sich für thermoplastisch verarbeitbare Kunststoffe Treibverfahren mit physikalischen oder thermischen Mitteln anwenden.

So wird beim Hochdruckgasverfahren das Treibgas (Stickstoff, Kohlendioxid) im Material bei 200 at und 160° C gelöst, und der nicht geschäumte Rohling wird dann in einer Form durch Erwärmen auf 120° C expandiert, wobei das im Material gelöste Treibgas unter Aufschäumen entweicht.

Ferner sind Polyurethan-Schaumstoffe bekannt, bei denen die endständige Isocyanatgruppe mit Wasser reagiert und Kohlendioxid abgegeben wird, das dann als Treibmittel wirkt. Die so hergestellten Schaumstoffe haben aber wesentlich schlechtere Wärmedämmeigenschaften als FCKW-Schaumstoffe, weshalb sie größere Bedeutung nur im Bauwesen erlangt haben. Insbesondere ist die Langzeitstabilität dieses Schaumstoffes so schlecht, daß seine Verwendung z.B. für Kühlschränke nicht in Betracht kommt.

Die mit Kohlendioxid als Treibgas verschäumten Kunststoffe haben am Anfang bessere Wärmedämmeigenschaften als mit Stickstoff verschäumte Kunststoffe. Jedoch wird auch das Wärmedämmvermögen der mit Kohlendioxid verschäumten Kunststoffe im Laufe der Zeit schlechter, was darauf zurückzuführen ist, daß das Kohlendioxid, das nach dem Verschäumen in den geschlossenen Poren des Schaumstoffes vorhanden ist, nach und nach aus diesem hinausdiffundiert und unter Volumenverminderung durch -ggf. feuchte - Luft, die ein höheres Wärmeleitvermögen als Kohlendioxid hat, ersetzt wird.

Grundsätzlich sind zur Herstellung von Polyurethan- oder PU-Schaumstoff zwei Verfahren bekannt, nämlich das Einstufenverfahren und das Zweistufenverfahren, wie beispielsweise aus A.M. Wittfoht, Kunststofftechnisches Wörterbuch, Carl Hanser Verlag, München-Wien 1981, Teil 1, Seite 145, ersichtlich ist.

Bei dem Einstufenverfahren werden die Gesamtmengen der Rezepturkomponenten, als Polyisocyanat (insbesondere Diisocyanat), Treibmittel, Polyol, Additiv und Aktivator, gleichzeitig in einer Stufe gemischt und verschäumt, während beim Zweistufenverfahren in der ersten Stufe die Gesamtmenge Polyisocyanat und eine Teilmenge Polyol zum Prepolymer (oder Semi-Prepolymer) umgesetzt wird und in der zweiten Stufe das Prepolymer (oder Semi-Prepolymer) mit Restpolyol, Treibmittel usw. vermischt und verschäumt wird.

Demgegenüber ist es Aufgabe der Erfindung, ein Verfahren zur Herstellung von Schaumstoff auf Polyurethangrundlage so zu gestalten, daß ein besseres Wärmedämmvermögen des Schaumstoffes erzielt wird, das sich überdies im Laufe der Zeit nicht nennenswert verschlechtert. Außerdem soll eine insbesondere für ein solches Verfahren geeignete Treibmittelvorstufe angegeben werden.

Diese Aufgabe wird erfindungsgemäß dadurch gelöst, daß man die herkömmlichen Rezepturkomponenten (Polyole und Polyisocyanate) mit einer wäßrigen Ammoniaklösung versetzt und anschließend den Verschäumungsvorgang durchführt.

Die Wirkungsweise der erfindungsgemäß zugesetzten wäßrigen Ammoniaklösung ist derzeit noch nicht genau bekannt; eine theoretische Erklärungsmöglichkeit ist aber folgende. Die wäßrige Ammoniaklösung dürfte mit dem Kohlendioxid, das, wenn die endständige Isocyanatgruppe mit Wasser reagiert, gebildet wird und als Treibgas fungiert, eine Reaktion eingehen, bei der Ammoniumcarbonat $(NH_4)_2CO_3$ oder Ammoniumbicarbonat $(NH_4)HCO_3$ gebildet wird, die sich im Laufe der Zeit langsam zu $NH_3$ und $CO_2$ zersetzen, wodurch das aus den Poren nach außen diffundierende $CO_2$ laufend wieder ergänzt wird. Diese beiden Substanzen wirken also als "Zellgasspeicher". Ferner scheint das vorhandene Wasser an den Wänden der in Bildung begriffenen Poren mit dem Polyisocyanat unter Bildung von Polyharnstoffen zu reagieren, so daß an den Porenwänden ein dichter Kunststoff-Film gebildet wird, der die Diffusion des Kohlendioxids nach außen hemmt. Auf diese Weise wird das Wärmedämmvermögen des Schaumstoffes über lange Zeit unverändert aufrechterhalten.

Es ist zwar aus der DE-A-26 47 216 ein Verfahren zur Herstellung eines flammenfesten Polyurethanschaumstoffes bekannt, bei dem ein Polyol, eine niedermolekulare Polyhydroxyverbindung, ein Polyisocyanat und eine Ammoniumverbindung, die bei Temperaturen unterhalb 100° C Ammoniak entwickelt, zur Umsetzung gebracht werden. Als Ammoniumverbindungen sind u.a. Ammoniumcarbonat und Ammoniumbicarbonat genannt. Diese Substanzen werden jedoch als solche zugesetzt, während sie bei dem erfindungsgemäßen Verfahren erst beim Verschäumungsvorgang gebildet werden. Der Wassergehalt der Ammoniaklösung ist, wie zwar erwähnt, wichtig, weil sich an den Porenwandungen wahrscheinlich ein dichterer Polyharnstoff-Film ausbildet und weil das Wasser während des Verschäumungsvorganges aufgrund seiner hohen Verdampfungswärme einen gewissen Kühleffekt hervorruft.

Zwar entsteht bei einer Zersetzung von Ammoniumcarbonat auch Wasser; dieses wird jedoch bei dem Verfahren nach der DE-A-26 47 416 als unerwünscht angesehen.

Jedenfalls haben die nach der DE-A-26 47 416 erhaltenen Schaumstoffe eine andere Struktur als die erfindungsgemäß hergestellten Schaumstoffe.

Vorzugsweise setzt man eine 40- bis 48gew.-%ige wäßrige Ammoniaklösung in einer Menge von etwa 0,15 bis 2,5, vorzugsweise 1 bis 2, Gewichtsteilen je 100 Gewichtsteile Polyol zu.

Die Verschäumung wird zweckmäßig bei etwa 15 bis 50° C, vorzugsweise bei Raumtemperatur, durchgeführt, wobei sich die angegebenen Temperaturen auf die Ausgangstemperaturen beziehen. Während des Verschäumens kann die Temperatur in dem sich bildenden Schaumstoff auch höher werden, wobei jedoch aufgrund des Wassergehalts der Ammoniaklösung ein allzu hoher Temperaturanstieg vermieden wird.

Die wäßrige Ammoniaklösung wird vorzugsweise einer der herkömmlichen Rezepturkomponenten (insbesondere dem Polyol) vor deren Vermischung mit der anderen Rezepturkomponente zugesetzt. Der Zusatz der wäßrigen Ammoniaklösung zum Polyol hat den Vorteil, daß eine vorzeitige Reaktion mit der Polyisocyanatkomponente vermieden wird. Ferner bildet die wäßrige Ammoniaklösung mit dem Polyol mindestens zum Teil ein Einphasengemisch, so daß nicht unbedingt besondere Maßnahmen erforderlich sind, um die wäßrige Ammoniaklösung zu dispergieren.

Es können alle in der Polyurethanchemie üblichen Polyole verwendet werden, wobei insbesondere die höhermolekularen Polyetherpolyole verwendet werden, die durch Addition von Oxiranen, insbesondere Propylenoxid (PO) und Ethylenoxid (EO) an di- bis polyfunktionelle "Starter"-Moleküle hergestellt werden. In der Technik werden folgende Starter verwendet: Ethylenglykol, 1,2-Propylenglykol, Bisphenol A, Trimethylolpropan, Trimethylolethan, Glycerin, Pentaerythrit, Sorbit, Zucker, abgebaute Stärke usw. Chlorhaltige Polyalkylenglykole werden weniger bevorzugt verwendet, da das Chlor mit dem Ammoniak unter Bildung von Ammoniumchlorid reagieren kann, das wegen seiner hygroskopischen Eigenschaften unerwünscht ist.

Als Polyole können auch Polyesterpolyole verwendet werden, die durch Umsetzung von di- und trifunktionellen Polyolen mit Dicarbonsäuren bzw. deren Anhydriden erhalten werden können.

Als Polyisocyanate können aliphatische und aromatische Polyisocyanate verwendet werden. Beispiele hierfür sind 1,6-Diisocyanatohexan, 3,5,5-Trimethyl-1-isocyanato-3-isocyanato-Methylcyclohexan, Biuret-Triisocyanat, Dimeryl-Diisocyanat, 4,4'-Diisocyanatodicyclohexylmethan, trimeres Isophorondiisocyanat, trimeres Hexandiiscyanat, 2,6-Diisocyanatohexansäuremethylester, 2,4- und 2,6-Diisocyanato-Toluol und dessen Gemische, 1,5-Diisocyanato-Naphthalin, 4,4'-Diisocyanato-Diphenylmethan, Diisocyanato-Diphenylmethan, urethanisiertes 4,4-Diisocyanatho-Diphenylmethan, carbodiimidisiertes 4,4'-Diisocyanato-Diphenylmethan, Uretdion des 2,4-Diisocyanato-Toluols, Triisocyanato-Triphenylmethan usw.

Zur Herstellung der erfindungsgemäßen Schaumstoffe können auch Diamine verwendet werden, um Harnstoffgruppen in das Molekül einzuführen. Weiterhin können die üblichen Katalysatoren, Stabilisatoren und Additive verwendet werden. Beispiele für Katalysatoren sind Verbindungen vom Typ der Lewis-Basen und Lewis-Säuren, wie Diaza-bicyclo-Octan (Dabco), Triethylamin, Dimethylbenzylamin, Bis-Dimethyolaminoethylether, Tetramethylguanidin, Bis-Dimethylaminomethylphenol, Zinn-Di-Ethylhexoat, Dibuthylzinn-Dilaurat, Dibuthylzinn-Bis-Dodecyl-Mercaptid, Blei-Phenyl-Ethyl-Dithiocarbaminat. Auch Alkalisalze organischer Säuren und Phenole sowie Phenol-Mannich-Basen können verwendet werden.

Beispiele für Stabilisatoren sind Schaumstabilisatoren, wie Polyxyloxan-Polyether-Copolymerisate unterschiedlichen Aufbaus, Hydrolyse-Stabilisatoren, Oxidations-Stabilisatoren und UV-Stabilisatoren.

Als Additive können beispielsweise Flammschutzmittel, z.B. Phospor enthaltende Verbindungen, und Farbstoffe verwendet werden.

Weiterhin können Blockierungsmittel verwendet werden, um die Lagerstabilität und die Beständigkeit gegenüber Luftfeuchtigkeit der Ausgangsverbindungen zu erhöhen.

Gegenstand der Erfindung ist ferner die Verwendung einer wäßrigen Ammoniaklösung mit den vorstehend angegebenen Parametern als Treibmittelvorstufe zum Einsatz in dem erfindungsgemäßen Verfahren.

Es wurde ferner festgestellt, daß das Wärmedämmvermögen der erfindungsgemäßen Schaumstoffe noch weiter verbessert und über einen längeren Zeitraum erhalten werden kann, wenn man im Reaktionsgemisch, in einer oder beiden Rezepturkomponenten oder in der wäßrigen Ammoniaklösung ein Treib- oder Zellgas mit einem Taupunkt von weniger als -50° C, vorzugsweise von weniger als -70°C, dispergiert und/oder löst und anschließend den Verschäumungsvorgang durchführt.

Aufgrund ihres verhältnismäßig hohen Taupunktes bilden die Gase beim Verschäumungsvorgang eine Vielzahl von kleinen "Keimen", von denen aus sich geschlossene Poren oder Hohlräume entwickeln, wenn sich das Wasser der wäßrigen Ammoniaklösung mit dem Polyisocyanat unter Bildung von $CO_2$ umsetzt. Das $CO_2$ wird dann aber sofort durch den Ammoniak gebunden, so daß die Größe der Poren begrenzt bleibt. Ein Zusammenfallen der Poren wird durch die langsame Zersetzung des Ammoniumcarbonats bzw. Ammoniumbicarbonats in Verbindung mit der Ausbildung eines dichten Polyharnstoff-Films in der Porenwandung verhindert.

Es tritt also ein Synergieeffekt auf. Zunächst wird eine homogene Blasenstruktur gebildet, die durch die langsame Zersetzung des während des Verschäumungsvorganges gebildeten Ammoniumcarbonats bzw. -bicarbonats stabilisiert wird. Es wurde festgestellt, daß die im Schaumstoff enthaltenen Bläschen kugelförmig sind, während die Bläschen, die ohne Zusatz der wäßrigen Ammoniaklösung erhalten wurden, wabenförmig sind.

Vorzugsweise verwendet man als Treib- oder Zellgas Stickstoff, Kohlendioxid und/oder Edelgase, wie Neon, Krypton, Argon und/oder Xenon. Das Treib- oder Zellgas wird vorzugsweise unter Druck dispergiert oder gelöst.

Nach einer besonders bevorzugten Ausführungsform der Erfindung wird das Treib- oder Zellgas in einer sonochemischen Reaktion dispergiert und/oder gelöst. Die sonochemische Reaktion wird vorzugsweise bei Normaldruck und Normaltemperatur durchgeführt, wobei unter Normaldruck der makroskopische Normaldruck zu verstehen ist. Bei dieser Ausführungsform kann der Zusatz einer wäßrigen Ammoniaklösung auch vollständig entfallen, da eine sehr homogene Mikroblasen- bzw. Mikroporenstruktur erhalten wird, die eine geringere Neigung zum Schrumpfen hat als eine Struktur mit größeren Blasen oder Poren.

Sonochemische Reaktionen sind beispielsweise aus der DE-Zeitschrift "Spektrum der Wissenschaft", April 1969, Seiten 60-66, an sich bekannt. Eine sonochemische Reaktion wird dadurch erzeugt, daß man das Treib- oder Zellgas in das Reaktionsgemisch, in eine oder beide Rezepturkomponenten oder in die wäßrige Ammoniaklösung einleitet und das Zweiphasengemisch mit Hilfe eines Ultraschallgenerators beschallt. Der Ultraschall wird mittels piezoelektrischer oder magnetostriktiver Materialien erzeugt. Es handelt sich hierbei um Stoffe, die sich ausdehnen oder zusammenziehen, wenn sie einem elektromagnetischen Feld ausgesetzt werden. Der Ultraschallgenerator schwingt vorzugsweise mit einer akustischen Frequenz im Bereich von etwa 0,8 bis 2 MHz, insbesondere bei etwa 1,6 MHz.

Vorzugsweise wird die sonochemische Reaktion mit dem Polyol durchgeführt, insbesondere wenn als Treib- oder Zellgas Stickstoff oder Xenon verwendet wird. Obwohl noch nicht genau bekannt ist, welche Vorgänge sich bei der sonochemischen Reaktion abspielen, nimmt man an, daß die Polyolmoleküle durch die aufgrund der Schockwellen entstehenden Kapillarwellen (Kavitationsbläschenreihen, auf deren Oberflächen sich die Wellen weiterbewegen) aufgespreizt werden. Im pulsierenden Ultraschallfeld wird durch das Implodieren der Kavitationsbläschen ein Unterdruck im Polyol erzeugt, wodurch die Gasmoleküle, wahrscheinlich unter Bildung von Nebenvalenzen, im Polyol gelöst werden. Hierbei tritt auch eine Viskositätsverminderung des Polyols ein. So ging z.B. bei einem Polyol mit einer Viskosität von 3000 mPas die Viskosität auf 1500 mPas zurück. Wird $CO_2$ als Zell- oder Treibgas verwendet, so kann die sonochemische Reaktion auch mit der Polyisocyanatkomponente durchgeführt werden.

Die Erfindung ist durch die nachstehenden Beispiele erläutert.

Beispiel 1

Es wurde nach dem bekannten Zweistufenverfahren gearbeitet, wobei ein Polyol der Firma Elastogran auf Zuckerbasis mit einem Molekulargewicht von mehr als 1000 verwendet wurde (Komponente A). Als Polyisocyanat wurde ein Diisocyanat mit einer Viskosität von 2300 mPas (20°C) (Komponente B) verwendet.

0,75g wäßrige 45gew.%ige Ammoniaklösung wurden in einem Becherglas 48,5 g der flüssigen Komponente A bei Raumtemperatur und normalem Atmosphärendruck zugesetzt. Es war zu erkennen, daß die Ammoniaklösung ohne Rühren sehr gut in die Komponente A eindiffundierte. In einem weiteren Becherglas wurde das so gebildete Gemisch mit 100 g der flüssigen Komponente B unter Rühren vermischt. Dieses Gemisch wurde in eine viereckige Form gegossen, in der es aufschäumte und erstarrte.

Es ergab sich ein niedriges Raumgewicht von nur 26,7 kg/m³, das mit Fluorkunststoffen nicht erreichbar ist. Die Poren des erhaltenen Schaumstoffes waren gleichmäßig und geschlossen, so daß eine Wasseraufnahme ausgeschlossen war. Es wurde ein λ-Wert von 0,028 kW/m²/h ermittelt, also ein λ-Wert, der besser ist, als er mit $CO_2$-geschäumtem Schaumstoff erzielbar ist.

### Beispiel 2

Es wurden als Komponente A der Polyol I-1190 von BASF (Viskosität 3000 mPas bei 20°C) und als Komponente B das Diisocyanat von Beispiel 1 im Mischungsverhältnis von 82,7 g Polyol auf 100 g Diisocyanat verwendet. In die Komponente A wurde Stickstoff eingeleitet, und das Zweiphasengemisch wurde mit einem Ultraschallgenerator von etwa 1,6 MHz bei Raumtemperatur beschallt. Der Stickstoff löste sich homogen im Polyol auf, wobei sich dessen Viskosität auf etwa 1500 mPas verminderte und die Temperatur auf etwa 30°C anstieg. Der so behandelte Polyol wurde dann mit 0,8 g Wasser versetzt und mit der auf Raumtemperatur befindlichen Komponente B vermischt und bei normalem Atmosphärendruck verschäumt. Das Raumgewicht des erhaltenen Schaumstoffs betrug 39 kg/m³ ( λ-Wert 0,024).

Zum Vergleich wurden die obigen Komponenten in gleichen Anteilen ohne sonochemisches Lösen von Stickstoff miteinander vermischt. Das Raumgewicht der erhaltenen Produktes betrug 700 kg/m³ ( λ-Wert 0,38).

Bei Zugabe von 1,38 g 45gew.-%iger Ammoniaklösung auf 82,7 g Polyol und der gleichen sonochemischen Behandlung wie oben betrug das Raumgewicht des erhaltenen Schaumstoffs 24,6 kg/m³ ( λ-Wert 0,023).

### Beispiel 3

Nach der Arbeitsweise von Beispiel 2 wurde in einer sonochemischen Reaktion Xenon in genau dem zu erwartenden expandierten Volumen im Diisocyanat gelöst. Das Raumgewicht des erhaltenen Schaumstoffs betrug 25 kg/m³, der λ-Wert 0,018.

Weitere besondere Vorteile des durch das Verfahren nach der Erfindung hergestellten Schaumstoffes sind, daß dieser selbst verlöschend ist, d.h. er ist zwar brennbar, verlöscht aber von selbst. Das dürfte auf den hohen Ammoniumcarbonat- bzw. Stickstoffanteil, der in den Poren eingeschlossen ist, zurückzuführen sei. Außerdem hat der so hergestellte Schaumstoff nicht nur, wie dargelegt, ein kleineres Raumgewicht, sondern bei kleinerem Raumgewicht die gleiche Stabilität wie ein entsprechender Fluorkunststoff.

### Ansprüche

1. Verfahren zur Herstellung von Schaumstoff auf Polyurethangrundlage, dadurch **gekennzeichnet,** daß man die herkömmlichen Rezepturkomponenten (Polyole und Polyisocyanate) mit einer wäßrigen Ammoniaklösung versetzt und anschließend den Verschäumungsvorgang durchführt.

2. Verfahren nach Anspruch 1, dadurch gekennzeichnet, daß man eine 40- bis 48gew.-%ige wäßrige Ammoniaklösung in einer Menge von etwa 0,15 bis 2,5, vorzugsweise 1 bis 2 Gewichtsteilen, auf 100 Gewichtsteile Polyol zusetzt.

3. Verfahren nach Anspruch 1 oder 2, dadurch gekennzeichnet, daß man die Verschäumung bei etwa 15 bis 50°, vorzugsweise bei Raumtemperatur, durchführt.

4. Verfahren nach einem der Ansprüche 1 bis 3, dadurch gekennzeichnet, daß man die wäßrige Ammoniaklösung einer der herkömmlichen Rezepturkomponenten, vorzugsweise dem Polyol, vor deren Vermischung mit der anderen Rezepturkomponente zusetzt.

5. Verwendung einer wäßrigen Ammoniaklösung als Treibmittelvorstufe im Verfahren nach einem der Ansprüche 1 bis 4.

6. Verfahren zur Herstellung von Schaumstoff auf Polyurethangrundlage, insbesondere nach einem der Ansprüche 1 bis 4, dadurch gekennzeichnet, daß man im Reaktionsgemisch, in einer oder beiden Rezepturkomponenten oder in der wäßrigen Ammoniaklösung ein inertes Treib- oder Zellgas mit einem Taupunkt von weniger als -50°C, vorzugsweise von weniger als -70°C, dispergiert und/oder löst und anschließend den Verschäumungsvorgang durchführt.

7. Verfahren nach Anspruch 6, dadurch gekennzeichnet, daß man als Treib- oder Zellgas Stickstoff, Kohlendioxid und/oder ein Edelgas, insbesondere Neon, Argon, Krypton und/oder Xenon, verwendet.

8. Verfahren nach Anspruch 6 oder 7, dadurch gekennzeichnet, daß man das Treib- oder Zellgas unter Druck dispergiert und/oder löst.

9. Verfahren nach einem der Ansprüche 6 bis 8, dadurch gekennzeichnet, daß man das Treib- oder Zellgas in einer sonochemischen Reaktion dispergiert und/oder löst.

10. Verfahren nach Anspruch 9, dadurch gekennzeichnet, daß man die sonochemische Reaktion bei Normaldruck und Normaltemperatur durchführt.

11. Schaumstoff, erhältlich nach einem der Ansprüche 1 bis 5 und 7 bis 10.